(19) **Europäisches Patentamt / European Patent Office / Office européen des brevets**

(11) **EP 1 323 326 B1**

(12) **EUROPEAN PATENT SPECIFICATION**

(45) Date of publication and mention
of the grant of the patent:
**16.07.2008 Bulletin 2008/29**

(51) Int Cl.:
*H04Q 7/38* (2006.01)     *H04B 7/02* (2006.01)
*H04Q 7/22* (2006.01)

(21) Application number: **01986389.3**

(22) Date of filing: **02.10.2001**

(86) International application number:
**PCT/EP2001/011383**

(87) International publication number:
**WO 2002/030144 (11.04.2002 Gazette 2002/15)**

(54) **MOBILE ACCESS NETWORKS**

MOBILFUNKZUGRIFFSNETZWERKE

RESEAUX D'ACCES DE MOBILES

(84) Designated Contracting States:
**AT BE CH CY DE DK ES FI FR GB GR IE IT LI LU MC NL PT SE TR**

(30) Priority: **03.10.2000 GB 0024177**

(43) Date of publication of application:
**02.07.2003 Bulletin 2003/27**

(73) Proprietor: **TELEFONAKTIEBOLAGET LM ERICSSON (publ)**
**164 83 Stockholm (SE)**

(72) Inventors:
• **VERES, András**
**H-1113 Budapest (HU)**
• **BARTA, Jozséf**
**H-1211 Budapest (HU)**

(74) Representative: **Sunderland, James Harry et al**
**Haseltine Lake**
**Lincoln House**
**300 High Holborn**
**London WC1V 7JH (GB)**

(56) References cited:
**EP-A- 1 032 237        US-A- 6 125 110**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical field of the invention

The present invention relates to mobile access networks and is concerned in particular with soft handover in such networks.

Technical background and related art

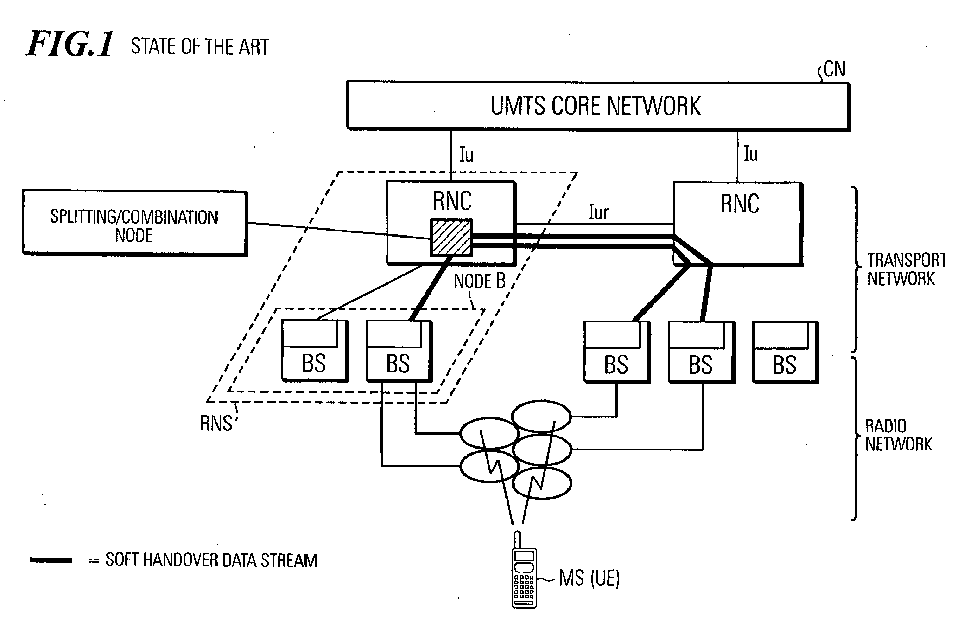

A third generation mobile communications system, such as a UMTS (Universal Mobile Telephone System) system, can be considered conceptually as comprising three major components or parts, as illustrated in Figure 1. These are a core network (CN), a transport or radio access network and a radio network.

The core network CN is the fixed infrastructure of the system which comprises entities to support mobility management, database operations and internetworking with other networks, such as PSTN networks (Public Switched Telephone Networks).

The transport or radio access network comprises entities that provide functionality to support radio coverage, in particular comprising radio interface support, radio resource management and radio operation and maintenance functions. In a UMTS system, the transport network or UTRAN (UMTS terrestrial radio access network) comprises a set of radio network subsystems (RNS's) each having a Radio Network Controller (RNC) and one or more Node B's (embodied as base stations (BS) for example) - as indicated by broken lines on the left of Figure 1. Each RNS of the UTRAN is connected to the core network (CN) through a logical interface (Iu), and different RNS's may connected one to another through a further logical interface (Iur).

The radio network is the radio channels between the Node B's (base stations BS) and mobile stations (MS) or user equipment (UE).

In third generation mobile access networks, such as for example UMTS networks, use is made of the macrodiversity (macroscopic diversity) technique, which enables a mobile station or user equipment (MS or UE) to be continuously connected to (communicating with) two or more base stations (BS) via a set of independent radio paths, as schematically illustrated in Figure 1. By combining received signals from the two or more independent radio paths of the set at a splitting/recombination node (in a radio network controller node, RNC, of the transport or radio access network) significantly better service quality can be achieved.

In this respect it will be understood that an important feature of third generation networks is that all data are sent in data packets (for example TCP/IP packets or ATM "cells") which "packet" method enables the utilisation of statistical multiplexing gain (when using the macrodiversity technique). This "packet" method also enables the admission of more connections, as compared to traditional circuit switched networks, but at the price that a certain ratio of packets may be lost due to traffic rate fluctuations.

Soft handover is a handover technique related to macrodiversity, in which handover is executed by adding a new connection to the macrodiversity set of radio path connections to base stations (Node B's), and releasing an old connection, see for instance the document EP-A-1 032 237.

Thus, when macrodiversity is employed (macrodiversity may also be referred to simply as soft handover or soft handover mode) one logical connection uses more than one physical connection between the mobile station (MS) and the splitting/recombination node. These physical connections are called soft handover connections of a given logical connection. As schematically illustrated in Figure 1, soft handover connections may traverse several nodes in the transport network between the base stations and the splitting/recombination node.

Depending on the technology used in the transport network, different implementations are used to support soft handover functionality in the network, e.g. with ATM technology AAL2 (ATM Adaptation Layer 2) connections may be used, with MPLS (Multiprotocol Label Switching) technology label paths may be used, and with TCP/IP networks IntServ (Integrated Services in the Internet) or DiffServ (Differentiated Services in the Internet) architectures may be used.

However, regardless of the technology used, in the state of the art, when a mobile station (MS) is entering a soft handover state in a third generation mobile access network, an appropriate transport network connection must be established between the base station (BS) (or Node B) and the soft handover splitting/recombination node. Since the air interface is the capacity limiting part of the access network in third generation access networks, the soft handover connection must guarantee very low packet loss ratio in the transport network. This requires very rigid admission control strategy in the transport nodes.

Further, in the state of the art, the same amount of transport network resources and the same quality of service guarantees are required for all soft handover connections regardless of the connections radio quality and the number of soft handover connections existing for the service.

Summary

Problems addressed by the present invention

As a consequence of the very rigid admission control strategy in the transport nodes, for soft handover connections in the state of the art, the larger part of possible statistical multiplexing gain is lost due to the necessary overdimensioning of the transport links called for by this rigid admission control.

Solution provided by the present invention

The present invention provides a method of soft handover in mobile access network using packet transmission, in which a mobile host has a plurality of active soft handover connections to the access network, those connections having respective independent radio paths from the mobile host to a splitting/recombination node of the mobile access network, each radio path having a radio channel to/from the mobile host to the node of the mobile access network which is in radio signal communication with the mobile host, and a transport channel to/from that radio signal communication node to the- splitting/recombination node (RNC). In the method the quality of the radio channel is measured at the radio communication signal node concerned, for each of the soft handover radio paths; a transport priority decision is made in the splitting/recombination node, the decision giving higher priorities to the soft handover connections having higher quality radio channels; packet classification is effected at the or each sending node, a sending node being a radio signal communication node in the uplink direction, and the sending node being the splitting/recombination node in the downlink direction, each packet to be sent being marked according to the assigned priority level of the radio channel via which it has travelled or is to travel; and buffer management is effected in all nodes handling the marked packets, in accordance with the assigned priority levels of the packets, to ensure that a lower packet loss ratio is experienced by higher priority packets.

The present invention also provides a soft handover system.

Advantages of the invention

The present invention has many advantages. For example, with the present invention, by monitoring or controlling the transmission loss ratios of different soft handover connections, the error ratio after recombination can be significantly improved even if the transmission network is congested. Further, for the same transport network design a higher level of network load can be maintained with soft degradation of service quality with increasing traffic demand unlike in the prior art, where there is a rigid requirement on transport quality. The present invention thus enables more soft handover connections to be maintained without rigid extra requirements on the transport, and better radio channel efficiency can be achieved with lower radio interference levels. As a consequence the quality and capacity of the air interface can be influenced, providing statistically more soft-handover connections available for combining.

Brief description of the drawings

Figure 1    is a schematic illustration of a third generation UMTS network;

Figure 2    is a schematic illustration for assistance in explanation of an embodiment of the present invention;

Figure 3    is a flow chart illustrating procedures carried out in an embodiment of the present invention;

Figure 4    schematically illustrates a buffer management procedure as may be applied in an embodiment of the present invention;

Figure 5    schematically illustrates a further aspect of the buffer management procedure or Figure 4;

Figure 6    is a graph illustrating beneficial effects of an embodiment of the present invention; and

Figure 7    is a graph further illustrating beneficial effects of an embodiment of the present invention.

The soft handover recombination efficiency in case of lossy transmission paths can be estimated. The calculations are applicable for both uplink and downlink recombination.

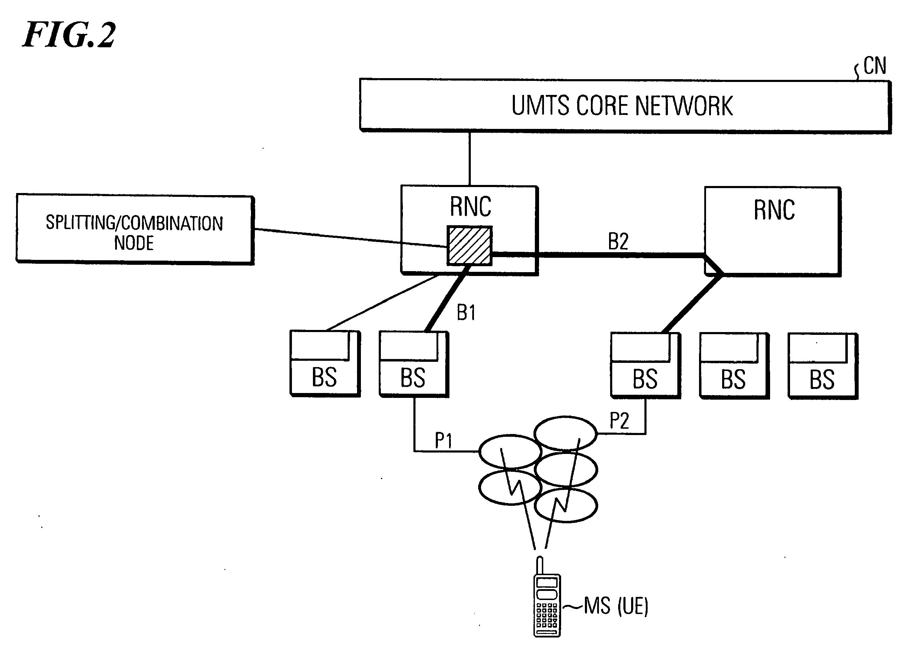

For simplicity it is assumed, as illustrated in Figure 2, that there are two soft handover connections active for a mobile host. The error ratios of the two radio channels concerned are denoted by P1 and P2 in Figure 2. Furthermore, the packet loss ratios on the two transmission paths up to the recombination node are denoted by B1 and B2 in Figure 2.

At the recombination point the observed error ratio is thus increased for both soft handover connections, since a certain ratio of packets carrying useful information is lost in the transport network. The path error ratio for both the radio and the transport network parts is thus approximately (for small ratios):

$$(1a) \quad E1 = P1 + B1$$

$$(1b) \quad E2 = P2 + B2$$

The recombination is successful if correct information arrives from either connection, i.e. the error ratio for the information received from the mobile station after recombination can be approximated by: -

$$(2a) \quad E = E1 * E2$$

or

$$(2b) \quad E = (P1 + B1) * (P2 + B2)$$

In an access network in accordance with the state of the art, the relation of B1 and B2 is not controlled or checked: only a very rigid admission procedure or packet scheduling method, as mentioned above, is applied to limit these values, with no differentiation on the basis of (i.e. taking no account of) the soft handover radio path properties, i.e. P1 and P2.

Further, in the state of the art, packets on the transport network are not differentiated on the basis of the soft handover connection properties. This means that all packets of a certain service (e.g. voice) are treated the same way in the buffers along the connections paths. Consequently the packet loss probability is equal for all soft handover connections (for a given service).

However, the inventors of the present invention have had the insight that (see the above formula (2b) that the final loss ratio after recombination is in direct relation of all four (P1, P2, B1, B2) values. They have had the further insight that network performance can be optimised by optimally controlling or monitoring these values.

Thus, in the state of the art, macrodiversity or soft handover in a (logical) radio channel can be used to significantly improve the radio quality by statistically combining independent radio connections. In accordance with the present invention, it might be said, a similar principle is applied in respect of the transport network, with similar expected improvements.

Embodiments of the present invention are not generally concerned with soft handover between sectors of the same base station (also known as softer handover). Softer handover requires no additional transport network connection, as splitting/recombination shall be performed in the base station. Thus, the description below will concentrate on soft handover, as opposed to softer handover, which is the primary concern of embodiments of the present invention.

It is observed that embodiments of the present invention are applicable in both uplink (combining) and downlink (splitting) directions.

The present invention is applicable for the soft handover connections in the transport network of a given logical connection between the mobile station and the splitting/recombination node.

In accordance with the present invention, packets containing radio frames are marked for appropriate packet handling at the nodes which the packets traverse. In TCP/IP networks the IP Type of Service (TOS) or DiffServ (DS) field can be used for differentiation in packet handling, in ATM based access networks the ATM cell CLP (Cell Loss Priority) bit can be used for this purpose. As radio path properties may change very fast, these settings may be determined on a packet-by-packet basis depending on the measured path properties.

In accordance with the present invention, provisions are made for:-

- Radio channel quality measurement at the base station
- Transport priority decision in the RNC
- Packet service classification at the sending node, in uplink this is the base station, in downlink this is the RNC node.
- Buffer management method in all transmission nodes handling packets according to priority

Radio channel quality measurement and Transport priority

In embodiments of the present invention, the measurement of radio channel quality is performed in the base stations (BS) (or Node B's). This measurement does not have to be the direct error ratio, but any related measurement e.g. radio interference measurement can be used equivalently. The radio channel measurements are sent to the RNC (Radio Network Controller) having the splitting/recombination node periodically.

In embodiments of the present invention, the RNC decides transport priority (H) based on the measurements: the best radio channel of a mobile terminal always receives the highest priority; e.g. for P1 < P2 < P3 the transport priorities would be H1 > H2 > H3.

Packet classification

In embodiments of the present invention, packet classification is performed at the sending node. In an uplink this is the base station, in a downlink this is the RNC node. During classification, each packet to be sent is marked according to the assigned priority level, e.g. priority H2 is set for packets sent on the P2 connection.

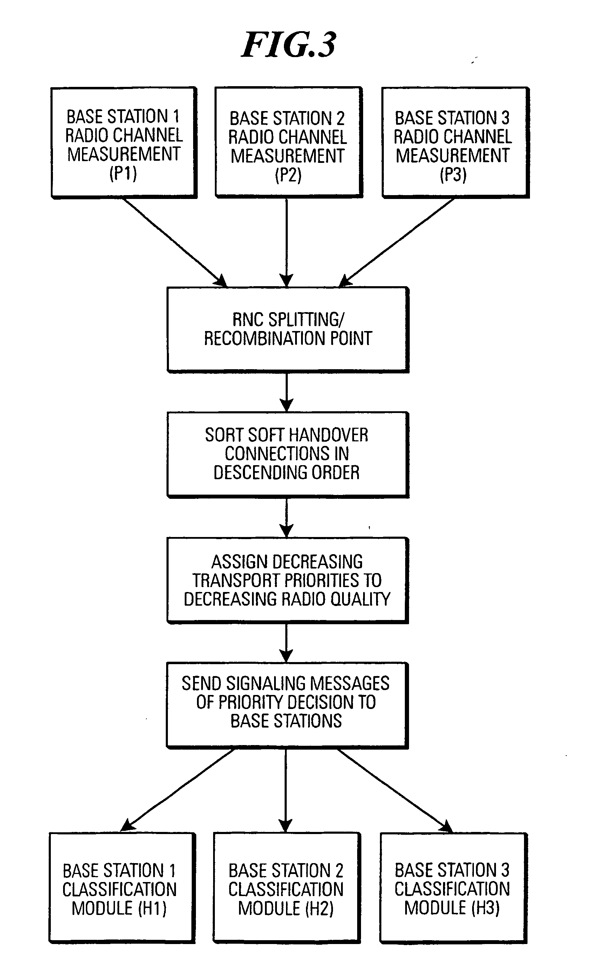

The flowchart of Figure 3 illustrates the steps involved in the an embodiment of the present invention in relation to radio channel quality measurement and transport priority and packet classification, in this case in the base stations.

Buffer management

In embodiments of the present invention, in every node of the transport network the packets are handled according to the set priorities. The buffer management ensures that a lower packet loss ratio is experienced by higher priority packets. It should preferably also be ensured that packets belonging to the same connection are not reordered even if they have different priorities, since it would cause confusion if a packet sent earlier arrives later at the destination node.

In a preferred embodiment of the present invention the following buffer management scheme is used, which meets the above requirements:

A single First In First Out buffer is used for all packets, all priorities and all connections of a given service type. Priority handling is ensured by setting different maximum occupancy levels (e.g., O1, 02, 03) for different priorities (e.g. H1, H2, H3). If H1 > H2 > H3, then O1 > 02 > 03 respectively.

If a packet arrives at the buffer it is dropped if the current occupancy level (O) is higher than the appropriate maximum occupancy level of the packet priority.

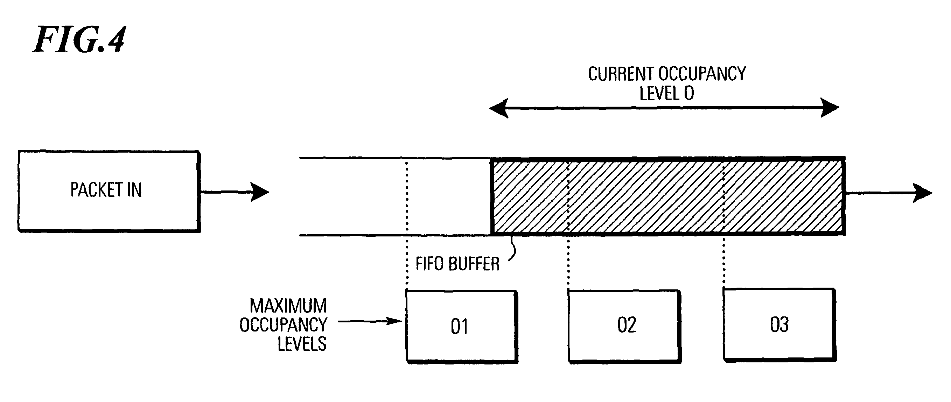

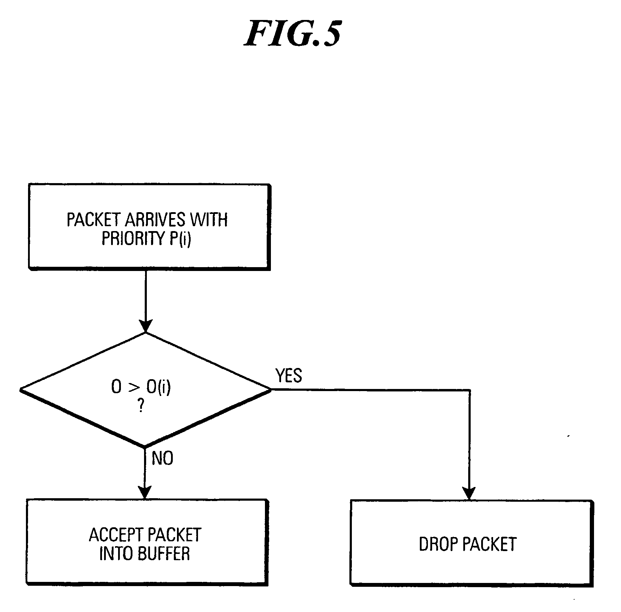

This buffer management scheme is schematically illustrated in Figures 4 and 5.

This buffer management scheme ensures that packets of higher priority experience a lower packet loss ratio and that packets are not reordered.

In an embodiment of the present invention the transmission loss ratio of soft handover connections is controlled or monitored in an appropriate way such that the error ratio after recombination can be significantly improved even if the transmission network is highly congested. Alternatively, in an embodiment of the present invention, for the same transport network design a higher network load can be maintained with soft-degradation in service quality with increasing traffic demand, unlike prior art proposals where there is a rigid requirement on transport quality. Further, with the employment of an embodiment of the present invention, it is unnecessary or less necessary to release existing or block new soft handover requests due to high transport congestion, and thus better radio channel efficiency can be achieved with lower radio interference levels.

Below there is presented a simple but realistic network scenario.

It is well known that purely by buffer management or scheduling methods the gross packet loss ratio on the transport network cannot be influenced. The average loss ratio on the transport network is denoted by B. By means of buffer management, only the distribution of losses can be controlled, i.e. a preference for one connection or the other can be provided, but the average loss probability remains the same:

$$(3) \quad B = (B1 + B2)/2$$

Substituting this result in the expression for the error ratio after recombination we get :

$$(4) \quad E = (P1 + B1) * (P2 + 2*B-B1)$$

If one soft handover radio channel has lower radio channel error ratio, e.g. P1 < P2, then the optimum value of E is obtained if B1 = 0, i.e. the path which has better radio quality should be prioritised in the transport network. In this case

$$(5) \quad Epri = P1 * (P2 + 2*B)$$

The gain with transport prioritisation is thus

$$(6a) \quad G = E/Epri$$

$$(6b) \quad G = ((P1 + B1)*(P2 + B2))/(P1 * (P2 + 2*B))$$

In prior art systems there is no differentiation between soft handover connections, and the packet loss ratio in the transport network is equal for all connections, i.e.

$$(7) \quad B1 = B2 = B$$

Consequently the gain of provided by the present invention over the prior art is:-

$$(8) \quad G = ((P1 + B)*(P2 + B))/(P1 * (P2+ 2*B))$$

To provide a concrete example, it is assumed that there are two soft handover connections for the mobile station. The error ratio of the better radio channel is P2 = 0.01. The second radio channel has a worse ratio of P2 = 0.1. The average transmission loss probability is B = 0.05.

$$P1 = 0.01, \quad P2 = 0.1, \quad B = 0.05$$

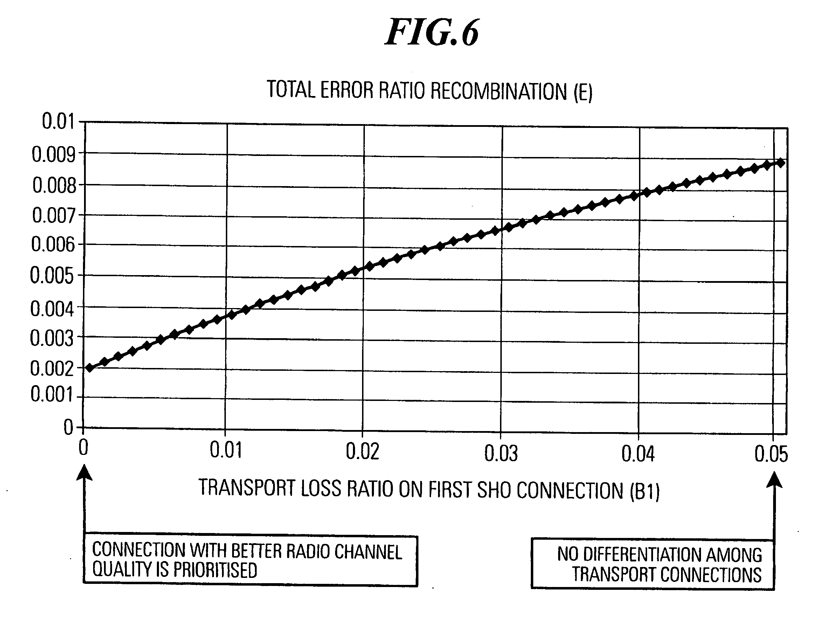

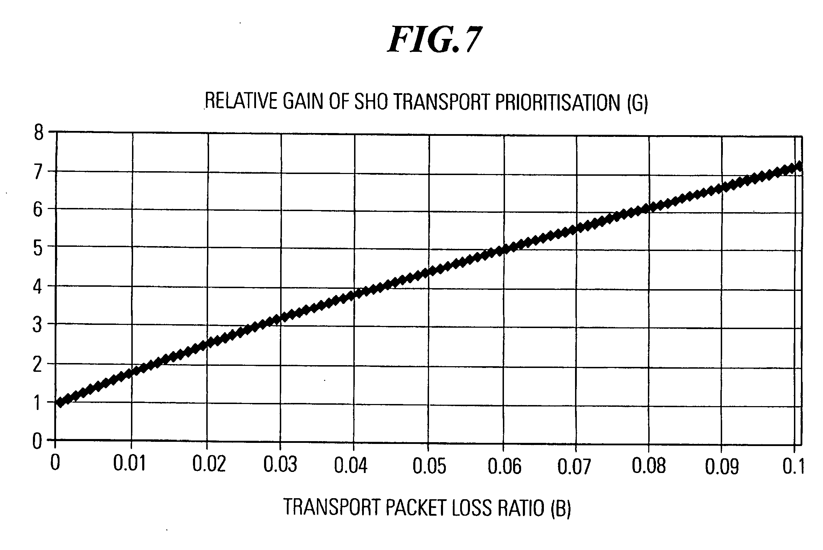

Calculating the error ratio after recombination for different levels of prioritisation between soft handover connections results are obtained as illustrated in Figure 6, which shows total error ratio after recombination (E) on the vertical axis, plotted against the transport loss ratios on the first soft handover (SHO) connection B1, corresponding to different prioritisations of the connection with the better radio channel quality, i.e. prioritisation of the better radio channel vis-à-vis no prioritisation (as per the prior art).
The results shows that the lowest error ratio after recombination can be achieved if the transport packet loss ratio of the better radio channel is minimised (B1 = 0), even if this causes the other soft handover connection to experience significantly worse transport service quality. By keeping B1=0, E=0.002 can be achieved.
On the other hand, the prior art would achieve approximately E=0.01 which is significantly worse.
The relative gain (G) provided by the present invention in this example, in comparison with the prior art, as a function of the transport network overall congestion (transport packet loss ratio B), is shown in Figure 7.
Thus, in accordance with the present invention, by controlling or monitoring the transmission loss ratios of different soft handover connections, the error ratio after recombination can be significantly improved even if the transmission network is congested. Further, for the same transport network design a higher level of network load can be maintained with soft degradation of service quality with increasing traffic demand unlike in the prior art, where there is a rigid requirement on transport quality.

The present invention enables more soft handover connections to be maintained without rigid extra requirements on the transport, thus better radio channel efficiency can be achieved with lower radio interference levels.

As a consequence the present invention can influence the quality and capacity of the air interface, providing statistically more soft-handover connections available for combining.

It will be appreciated that the present invention requires the interworking of several network elements such as base station (Node B), routers/switches in the access network and the RNC. However, the major components are readily available in current platforms. For operation it is required that radio channel measurements are signalled to the RNC periodically. This is already effected in some prior art systems for different reasons, and can probably be reused for the present invention. In an embodiment of the present invention the end nodes of the connections have to be able to determine appropriate transport priority levels, which can be carried our by software. Packet marking of transport connections is supported by most current routers/switches. The buffer management method proposed above for use in an embodiment of the present invention may require new hardware design, but if the requirement on packet reordering is not so rigid, other buffer management methods may be alternatively applied, such as, for example, WFQ (Weighted Fair Queueing), RIO (Random Early Detection - RED - with In/Out Bit).

## Claims

1. A method of soft handover in a mobile access network using packet transmission, in which a mobile host has a plurality of active soft handover connections to the access network, the soft handover connections having respective independent radio paths from the mobile host (MS) to a splitting/recombination node (RNC) of the mobile access network, each radio path having a radio channel to/from the mobile host (MS) to the node (BS, Node B) of the mobile access network which is in radio signal communication with the mobile host (MS), and a transport channel to/from that radio signal communication node (BS, Node B) to the splitting/recombination node (RNC), the method comprising:-

   measuring the quality of the radio channel at the radio communication signal node (BS, Node B) concerned, for each of the soft handover radio paths; making a transport priority decision in the splitting/recombination node (RNC), the decision giving higher priorities to the soft handover connections having higher quality radio channels; effecting packet classification at the or each sending node, a sending node being a radio signal communication node (BS, Node B) in the uplink direction, and the sending node being the splitting/recombination node (RNC) in the downlink direction, each packet to be sent being marked according to the assigned priority level of the radio channel via which it has travelled or is to travel; and effecting buffer management in all nodes handling the marked packets, in accordance with the assigned priority levels of the packets, to ensure that a lower packet loss ratio is experienced by higher priority packets.

2. A method as claimed in claim 1, wherein the buffer management ensures that packets belonging to the same soft handover connection are not reordered even if they have different priorities.

3. A method as claimed in claim 1 or 2, wherein the buffer management employs, in a sending node concerned, a single First-In First-Out buffer for all packets, all priorities and all connections of a given service type, priority handling of higher priority packets being ensured by setting higher maximum occupancy levels for packets of higher priorities, dropping a packet arriving at the buffer if the current occupancy level of the buffer for the priority of the packet concerned is higher than the permitted maximum occupancy level for that priority.

4. A soft handover system for a mobile access network using packet transmission and having a mobile host with a plurality of active soft handover connections to the access network, the soft handover connections having respective independent radio paths from the mobile host (MS) to a splitting/recombination node (RNC) of the mobile access network, each radio path having a radio channel to/from the mobile host (MS) to the node (BS, Node B) of the mobile access network which is in radio signal communication with the mobile host (MS), and a transport channel to/from that radio signal communication node (BS, Node B) to the splitting/recombination node (RNC), the system comprising:-

   quality measurement apparatus which is operable to measure the quality of the radio channel at the radio communication signal node (BS, Node B) concerned, for each of the soft handover radio paths; a decision unit which is operable to make a transport priority decision in the splitting/recombination node (RNC), the decision giving higher priorities to the soft handover connections having higher quality radio channels; classification equipment which is operable to effect packet classification at the or each sending node, a sending node being a radio signal communication node (BS, Node B) in the uplink direction, and the sending node being the splitting/recombination node (RNC) in the downlink direction, each packet to be sent being marked according to the assigned priority level of the radio channel via which it has travelled or is to travel; and

a buffer manager which is operable to effect buffer management in all nodes handling the marked packets, in accordance with the assigned priority levels of the packets, to ensure that a lower packet loss ratio is experienced by higher priority packets.

**5.** A system as claimed in claim 4, wherein the buffer manager is so operable as to ensure that packets belonging to the same soft handover connection are not reordered even if they have different priorities.

**6.** A system as claimed in claim 4 or 5, wherein the buffer manager employs, in a sending node concerned, a single First-In First-Out buffer for all packets, all priorities and all connections of a given service type, priority handling of higher priority packets being ensured by setting higher maximum occupancy levels for packets of higher priorities, dropping a packet arriving at the buffer if the current occupancy level of the buffer for the priority of the packet concerned is higher than the permitted maximum occupancy level for that priority.

**Patentansprüche**

**1.** Verfahren für eine weiche Übergabe in einem Netz mit mobilem Zugriff, in dem Paketübertragung verwendet wird, und in dem ein mobiler Host eine Anzahl aktiver weicher Übergabeverbindungen zum Zugriffsnetz besitzt, und die weichen Übergabeverbindungen jeweils unabhängige Hochfrequenzpfade vom mobilen Host (MS) zu einem Zerlegungs/Zusammensetz-Knoten (RNC) des Netzes mit mobilem Zugriff haben, und jeder Hochfrequenzpfad einen Hochfrequenzkanal zum bzw. vom mobilen Host (MS) zum Knoten (BS, Knoten B) des Netzes mit mobilem Zugriff aufweist, das über Hochfrequenzsignale mit dem mobilen Host (MS) kommuniziert, und einen Transportkanal zum bzw. vom Hochfrequenzsignal-Kommunikationsknoten (BS, Knoten B) zum Zerlegungs/Zusammensetz-Knoten (RNC), wobei das Verfahren umfasst:

das Messen der Beschaffenheit des Hochfrequenzkanals am betreffenden Hochfrequenzsignal-Kommunikationsknoten (BS, Knoten B) für jeden der weichen Übergabe-Hochfrequenzpfade;

das Herstellen einer Transportprioritätsentscheidung im Zerlegungs/Zusammensetz-Knoten (RNC), wobei die Entscheidung den weichen Übergabeverbindungen höhere Prioritäten zuteilt, die Hochfrequenzkanäle mit besserer Beschaffenheit aufweisen;

das Bewirken einer Paketklassifizierung an dem oder jedem Sendeknoten, wobei ein Sendeknoten ein Hochfrequenzsignal-Kommunikationsknoten (BS, Knoten B) in der Hochverbindungsrichtung ist, und der Sendeknoten der Zerlegungs/Zusammensetz-Knoten (RNC) in der Herunterverbindungsrichtung ist, und jedes zu sendende Paket gemäß der zugewiesenen Prioritätshöhe des Hochfrequenzkanals markiert wird, über den es sich bewegt hat oder sich bewegen wird; und

das Bewirken einer Pufferverwaltung in allen Knoten, die die markierten Pakete gemäß den zugewiesenen Prioritätshöhen der Pakete bearbeiten, um sicherzustellen, dass Pakete mit höherer Priorität ein geringeres Paketverlustverhältnis aufweisen.

**2.** Verfahren nach Anspruch 1, worin die Pufferverwaltung sicherstellt, dass Pakete, die zu der gleichen weichen Übergabeverbindung gehören, auch dann nicht umgeordnet werden, wenn sie unterschiedliche Prioritäten haben.

**3.** Verfahren nach Anspruch 1 oder 2, worin die Pufferverwaltung in einem betroffenen Sendeknoten einen einzigen First-In-First-Out-Puffer für alle Pakete, alle Prioritäten und alle Verbindungen eines gegebenen Diensttyps verwendet, und die Prioritätshandhabung von Paketen mit höherer Priorität **dadurch** sichergestellt wird, dass höhere maximale Besetzungsniveaus für Pakete mit höheren Prioritäten festgelegt werden, und ein Paket verworfen wird, das an dem Puffer ankommt, falls das momentane Besetzungsniveau des Puffers für die Priorität des betreffenden Pakets höher ist als das zulässige maximale Besetzungsniveau für diese Priorität.

**4.** System für weiche Übergaben in einem Netz mit mobilem Zugriff, in dem Paketübertragung verwendet wird und ein mobiler Host mit einer Anzahl aktiver weicher Übergabeverbindungen zum Zugriffsnetz vorhanden ist, wobei die weichen Übergabeverbindungen jeweils unabhängige Hochfrequenzpfade vom mobilen Host (MS) zu einem Zerlegungs/Zusammensetz-Knoten (RNC) des Netzes mit mobilem Zugriff haben, und jeder Hochfrequenzpfad einen Hochfrequenzkanal zum bzw. vom mobilen Host (MS) zum Knoten (BS, Knoten B) des Netzes mit mobilem Zugriff aufweist, das über Hochfrequenzsignale mit dem mobilen Host (MS) kommuniziert, und einen Transportkanal zum bzw. vom Hochfrequenzsignal-Kommunikationsknoten (BS, Knoten B) zum Zerlegungs/Zusammensetz-Knoten (RNC), wobei das System umfasst:

eine Beschaffenheitsmessvorrichtung, die so betreibbar ist, dass sie die Beschaffenheit des Hochfrequenzkanals am betreffenden Hochfrequenzsignal-Kommunikationsknoten (BS, Knoten B) für jeden der weichen Übergabe-Hochfrequenzpfade misst;

eine Entscheidungseinheit, die so betreibbar ist, dass sie eine Transportprioritätsentscheidung im Zerlegungs/Zusammensetz-Knoten (RNC) trifft, wobei die Entscheidung den weichen Übergabeverbindungen höhere Prioritäten zuteilt, die Hochfrequenzkanäle mit besserer Beschaffenheit aufweisen;

eine Klassifizierungsvorrichtung, die so betreibbar ist, dass sie eine Paketklassifizierung an dem oder jedem Sendeknoten bewirkt, wobei ein Sendeknoten ein Hochfrequenzsignal-Kommunikationsknoten (BS, Knoten B) in der Hochverbindungsrichtung ist, und der Sendeknoten der Zerlegungs/Zusammensetz-Knoten (RNC) in der Herunterverbindungsrichtung ist, und jedes zu sendende Paket gemäß der zugewiesenen Prioritätshöhe des Hochfrequenzkanals markiert wird, über den es sich bewegt hat oder sich bewegen wird; und

einen Pufferverwalter, der so betreibbar ist, dass er eine Pufferverwaltung in allen Knoten ausführt, die die markierten Pakete gemäß den zugewiesenen Prioritätshöhen der Pakete bearbeiten, um sicherzustellen, dass Pakete mit höherer Priorität ein geringeres Paketverlustverhältnis aufweisen.

5. System nach Anspruch 4, worin der Pufferverwalter so betreibbar ist, dass er sicherstellt, dass Pakete, die zu der gleichen weichen Übergabeverbindung gehören, auch dann nicht umgeordnet werden, wenn sie unterschiedliche Prioritäten haben.

6. System nach Anspruch 4 oder 5, worin der Pufferverwalter in einem betroffenen Sendeknoten einen einzigen First-In-First-Out-Puffer für alle Pakete, alle Prioritäten und alle Verbindungen eines gegebenen Diensttyps verwendet, und die Prioritätshandhabung von Paketen mit höherer Priorität **dadurch** sichergestellt wird, dass höhere maximale Besetzungsniveaus für Pakete mit höheren Prioritäten festgelegt werden, und ein Paket verworfen wird, das an dem Puffer ankommt, falls das momentane Besetzungsniveau des Puffers für die Priorität des betreffenden Pakets höher ist als das zulässige maximale Besetzungsniveau für diese Priorität.

## Revendications

1. Procédé de transfert souple dans un réseau d'accès mobile utilisant la transmission de paquets, dans lequel un hôte mobile possède une pluralité de connexions de transfert souple actives auprès du réseau d'accès, les connexions de transfert souple possédant des chemins radio indépendants respectifs entre l'hôte mobile (MS) et un noeud de subdivision/recombinaison (RNC) du réseau d'accès mobile, chaque chemin radio comprenant un canal radio de/vers l'hôte mobile (MS) au/vers le noeud (BS, noeud B) du réseau d'accès mobile qui est en communication de signaux radio avec l'hôte mobile (MS), et un canal de transport de/vers ce noeud de communication de signaux radio (BS, noeud B) au noeud de subdivision/recombinaison (RNC), le procédé comprenant les étapes consistant à :

mesurer sur le noeud de communication de signaux radio (BS, noeud B) concerné la qualité du canal radio, pour chacun des chemins radio de transfert souple ;

prendre sur le noeud de subdivision/recombinaison (RNC) une décision de priorité de transport, la décision donnant des priorités supérieures aux connexions de transfert souple qui ont des canaux radio de meilleure qualité ;

réaliser un classement des paquets sur le ou chaque noeud émetteur, un noeud émetteur étant un noeud de communication de signaux radio (BS, noeud B) dans la direction montante et le noeud émetteur étant le noeud de subdivision/recombinaison (RNC) dans la direction descendante, chaque paquet à émettre étant marqué selon le niveau de priorité attribué au canal radio qu'il a parcouru ou qu'il doit parcourir ; et

réaliser une gestion des tampons dans tous les noeuds traitant les paquets marqués, en fonction des niveaux de priorité attribués aux paquets, afin de garantir qu'un rapport de perte de paquets inférieur soit obtenu pour les paquets de priorité supérieure.

2. Procédé selon la revendication 1, dans lequel la gestion des tampons garantit que des paquets appartenant à la même connexion de transfert souple ne sont pas reclassés, même s'ils ont des priorités différentes.

3. Procédé selon la revendication 1 ou 2, dans lequel la gestion des tampons, dans un noeud émetteur considéré, utilise un unique tampon du type premier entré, premier sorti pour tous les paquets, toutes les priorités et toutes les connexions d'un type de service donné, le traitement prioritaire des paquets de priorité supérieure étant assuré en établissant des niveaux d'occupation maximale supérieurs pour les paquets à priorités supérieures, en supprimant un paquet qui arrive dans le tampon si le niveau d'occupation actuel du tampon pour la priorité du paquet considéré est supérieur au niveau d'occupation maximale autorisé pour cette priorité.

4. Système de transfert souple pour un réseau d'accès mobile utilisant la transmission de paquets et possédant un hôte mobile qui a une pluralité de connexions de transfert souple actives auprès du réseau d'accès, les connexions de transfert souple possédant des chemins radio indépendants respectifs entre l'hôte mobile (MS) et un noeud de subdivision/recombinaison (RNC) du réseau d'accès mobile, chaque chemin radio comprenant un canal radio de/vers l'hôte mobile (MS) au noeud (BS, noeud B) du réseau d'accès mobile qui est en communication de signaux radio avec l'hôte mobile (MS), et un canal de transport de/vers ce noeud de communication de signaux radio (BS, noeud B) au noeud de subdivision/recombinaison (RNC), le système comprenant :

un appareil de mesure de la qualité qui est apte à mesurer sur le noeud de communication de signaux radio (BS, noeud B) concerné la qualité du canal radio, pour chacun des chemins radio de transfert souple ;
une unité de décision qui est en mesure de prendre sur le noeud de subdivision/recombinaison (RNC) une décision de priorité de transport, la décision donnant des priorités supérieures aux connexions de transfert souple qui ont des canaux radio de meilleure qualité ;
un équipement de classement qui est en mesure de réaliser un classement des paquets sur le ou chaque noeud émetteur, un noeud émetteur étant un noeud de communication de signaux radio (BS, noeud B) dans la direction montante et le noeud émetteur étant le noeud de subdivision/recombinaison (RNC) dans la direction descendante, chaque paquet à émettre étant marqué selon le niveau de priorité attribué au canal radio qu'il a parcouru ou qu'il doit parcourir; et
un gestionnaire de tampons qui est en mesure de réaliser une gestion des tampons dans tous les noeuds traitant les paquets marqués, en fonction des niveaux de priorité attribués aux paquets, afin de garantir qu'un rapport de perte de paquets inférieur soit obtenu pour les paquets de priorité supérieure.

5. Système selon la revendication 4, dans lequel le gestionnaire de tampons est en mesure de garantir que des paquets appartenant à la même connexion de transfert souple ne soient pas reclassés, même s'ils ont des priorités différentes.

6. Système selon la revendication 4 ou 5, dans lequel le gestionnaire de tampons, dans un noeud émetteur considéré, utilise un unique tampon du type premier entré, premier sorti pour tous les paquets, toutes les priorités et toutes les connexions d'un type de service donné, le traitement prioritaire des paquets de priorité supérieure étant assuré en établissant des niveaux d'occupation maximale supérieurs pour les paquets à priorités supérieures, en supprimant un paquet qui arrive dans le tampon si le niveau d'occupation actuel du tampon pour la priorité du paquet considéré est supérieur au niveau d'occupation maximale autorisé pour cette priorité.

**FIG.1** STATE OF THE ART

UMTS CORE NETWORK

CN

TRANSPORT NETWORK

RADIO NETWORK

RNC

Iu

Iu

Iur

RNC

NODE B

SPLITTING/COMBINATION NODE

BS

BS

BS

BS

BS

RNS'

MS (UE)

= SOFT HANDOVER DATA STREAM

# FIG.2

# FIG.3

BASE STATION 1 RADIO CHANNEL MEASUREMENT (P1)

BASE STATION 2 RADIO CHANNEL MEASUREMENT (P2)

BASE STATION 3 RADIO CHANNEL MEASUREMENT (P3)

RNC SPLITTING/ RECOMBINATION POINT

SORT SOFT HANDOVER CONNECTIONS IN DESCENDING ORDER

ASSIGN DECREASING TRANSPORT PRIORITIES TO DECREASING RADIO QUALITY

SEND SIGNALING MESSAGES OF PRIORITY DECISION TO BASE STATIONS

BASE STATION 1 CLASSIFICATION MODULE (H1)

BASE STATION 2 CLASSIFICATION MODULE (H2)

BASE STATION 3 CLASSIFICATION MODULE (H3)

**FIG.4**

EP 1 323 326 B1

# FIG.5

PACKET ARRIVES WITH
PRIORITY P(i)

$O > O(i)$
?

YES

NO

ACCEPT PACKET
INTO BUFFER

DROP PACKET

# FIG.6

TOTAL ERROR RATIO RECOMBINATION (E)

TRANSPORT LOSS RATIO ON FIRST SHO CONNECTION (B1)

CONNECTION WITH BETTER RADIO CHANNEL QUALITY IS PRIORITISED

NO DIFFERENTIATION AMONG TRANSPORT CONNECTIONS

EP 1 323 326 B1

# FIG.7

## RELATIVE GAIN OF SHO TRANSPORT PRIORITISATION (G)

TRANSPORT PACKET LOSS RATIO (B)

EP 1 323 326 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1032237 A